# EUROPÄISCHE PATENTSCHRIFT

(11) **EP 2 611 658 B1**
(45) Veröffentlichungstag und Bekanntmachung des Hinweises auf die Patenterteilung: **04.06.2014**
(21) Anmeldenummer: 11748938.5
(22) Anmeldetag: 25.08.2011
(51) Int. Cl.: B60T 7/04, B60T 11/20, B60T 13/68, B60T 17/18

(54) **BREMSANLAGE FÜR KRAFTFAHRZEUGE**
BRAKE SYSTEM FOR MOTOR VEHICLES
SYSTÈME DE FREINAGE POUR VÉHICULES AUTOMOBILES

(30) Priorität: 24.08.2011 DE 102011081461; 30.08.2010 DE 102010039931
(43) Veröffentlichungstag der Anmeldung: 10.07.2013
(73) Patentinhaber: Continental Teves AG & Co. oHG, 60488 Frankfurt (DE)
(72) Erfinder: LINKENBACH, Steffen, 65760 Eschborn (DE); DRUMM, Stefan, A., 55291 Saulheim (DE)
(86) Internationale Anmeldenummer: PCT/EP2011/064595
(87) Internationale Veröffentlichungsnummer: WO 2012/028521

(56) Entgegenhaltungen:
- WO-A1-02/42138
- DE-A1- 3 636 442
- DE-A1-102005 036 638
- GB-A- 2 443 921

## Beschreibung

Die Erfindung betrifft eine Bremsanlage für Kraftfahrzeuge mit einem mittels eines Bremspedals betätigbaren Hauptbremszylinder, an den Radbremsen angeschlossen sind, einer elektrisch steuerbaren Druckbereitstellungseinrichtung, einer Druckregelventilanordnung zur Regelung und/oder Steuerung eines an einer Radbremse eingesteuerten Radbremsdruckes und einer ersten elektronischen Steuer- und Regeleinheit, welche die Druckbereitstellungseinrichtung und/oder die Druckregelventilanordnung steuert oder regelt.

In der Kraftfahrzeugtechnik finden "Brake-by-wire"-Bremssysteme eine immer größere Verbreitung. Solche Bremssysteme umfassen oftmals eine Pedalentkopplungseinheit, welche einem Hauptbremszylinder vorgeschaltet ist, wodurch eine Bremspedalbetätigung durch den Fahrer in der Betriebsart "Brake-by-wire" ein Auftrennen der direkten hydraulischen Verbindung des Hauptbremszylinders mit den Radbremsen, sowie ein Aufschalten des von der Druckbereitstellung abgegebenen hydraulischen Drucks auf die Radbremsen bewirkt. By-wire und demzufolge nicht hydraulisch ist dabei ein Abschnitt der Wirkungskette von einer Fahrerwunscherfassung zum Aufbau eines entsprechenden Bremssystemdrucks in der Druckbereitstellungseinrichtung. Im "By-wire"-Betrieb beaufschlagt die elektrisch steuerbare Druckbereitstellungseinrichtung die Radbremsen mit Bremsdruck. Um dem Fahrer in der Betriebsart "Brake-by-wire" ein angenehmes Pedalgefühl zu vermitteln, umfassen "By-wire"-Bremsanlagen üblicherweise eine Bremspedalgefühl-Simulationseinrichtung. Bei diesen Bremssystemen kann die Bremse auch ohne aktives Zutun des Fahrzeugführers aufgrund elektronischer Signale betätigt werden. Diese elektronischen Signale können beispielsweise von einem elektronischen Stabilitätsprogramm ESC oder einem Abstandsregelsystem ACC ausgegeben werden.

GB 2 443 921 A offenbart eine Kraftfahrzeugbremsanlage mit einem Hauptbremszylinder, einer elektrisch steuerbaren Druckbereitstellungseinrichtung, einer Druckregelventilanordnung zur Regelung eines Radbremsdrucks und einer elektronischen Steuereinheit, welche die Druckbereitstellungseinrichtung und die Druckregelventilanordnung steuert.

Bei nicht betriebsbereiter "By-wire"-Funktion - beispielsweise infolge eines möglichen Ausfalls der elektrisch steuerbaren Druckbereitstellungseinrichtung - schaltet das Bremssystem in eine Rückfallbetriebsart, in der die herkömmliche direkte hydraulische Kopplung der Kammern des Tandemhauptbremszylinders mit den Radbremsen wieder hergestellt ist. Damit ist ein mit einer solchen "By-wire"-Bremsanlage ausgerüstetes Fahrzeug auch bei einem Ausfall der Druckbereitstellungseinrichtung, einem Ausfall der Elektronikeinheit und sogar bei einem Ausfall der elektrischen Energieversorgung bremsbar - dann jedoch lediglich mit der vom Fahrer durch das Betätigen des Bremspedals bereit gestellten Stellenergie.

Der vorliegenden Erfindung liegt die Aufgabe zugrunde, die Rückfallbetriebsart einer "By-wire"-Fahrzeugbremsanlage mit einer vom Funktionieren der Druckbereitstellungseinrichtung unabhängigen Bremskraftunterstützung auszustatten.

Diese Aufgabe wird erfindungsgemäß durch eine Bremsanlage gemäß Anspruch 1 gelöst, wonach diese eine elektrisch steuerbare Zusatzdruckbereitstellungsvorrichtung umfasst, mittels welcher der Hauptbremszylinder betätigbar ist, insbesondere mittels welcher ein Druck in einem Zwischenraum des Hauptbremszylinders steuer- oder regelbar ist.

Weitere bevorzugte Ausführungsformen bzw. vorteilhafte Ausgestaltungen der Erfindung ergeben sich aus den Unteransprüchen und der nachfolgenden Beschreibung anhand einer Figur.

Die Erfindung geht von der Überlegung aus, dass eine elektrohydraulische Bremsanlage, welche eine "Brake-by-wire"-Normalbetriebsart und eine hydraulische Rückfallebene aufweist, in jedem Betriebszustand ausreichend Bremskraft bereitstellen muss. Dies sollte insbesondere dann geschehen, wenn die Steuer- und Regeleinheit zum Ansteuern der Druckbereitstellungseinrichtung bzw. die Druckbereitstellungseinrichtung selbst eine Fehlfunktion aufweisen oder ganz ausfallen.

Wie nunmehr erkannt wurde, lässt sich diese Aufgabe lösen, indem eine unabhängige zusätzliche Druckbereitstellungseinrichtung bereitgestellt wird, durch welche der Hauptbremszylinder gewissermaßen fremdbetätigt werden kann. Dazu wird die Zusatzdruckbereitstellungsvorrichtung hydraulisch mit einem Zwischenraum im Hauptbremszylinder derart verbunden, dass ein Kolben im Hauptbremszylinder bei Verschiebung von Druckmittel in diesem Zwischenraum durch die Zusatzdruckbereitstellungsvorrichtung betätigt wird und dadurch Druck in den Kammern des Hauptbremszylinders aufgebaut wird bzw. von dort Bremsflüssigkeit in die Bremskreise verschoben wird.

Bevorzugt ist die Bremsanlage in einer so genannten "Brake-by-wire"-Betriebsart sowohl vom Fahrzeugführer als auch unabhängig vom Fahrzeugführer ansteuerbar, vorzugsweise wird sie in der "Brake-by-wire"-Betriebsart betrieben und kann in mindestens einer Rückfallbetriebsart betrieben werden, in der nur der Betrieb durch den Fahrzeugführer möglich ist.

Gemäß einem ersten bevorzugten Ausführungsbeispiel umfasst die Bremsanlage für Kraftfahrzeuge einen mittels eines Bremspedals betätigbaren Hauptbremszylinder, eine Radbremsdruckmodulationseinrichtung, an die Radbremsen angeschlossen sind, eine elektrisch steuerbare Druckbereitstellungseinrichtung (bevorzugt eine Zylinder-Kolben-Anordnung, deren Kolben durch einen elektromechanischen Aktuator betätigbar ist), eine Druckregelventilanordnung zur Regelung und/oder Steuerung eines an einer Radbremse eingesteuerten Radbremsdruckes und eine elektronische Steuer- und Regeleinheit (Elektronikeinheit, ECU), welche der Steuerung bzw. Regelung der Bremsanlage in einer Normalbremsfunktion ohne Verstärkung durch einen Zusatzverstärker (Zusatzdruckbereitstellungsvorrichtung) dient.

Die Druckregelventilanordnung ist bevorzugt an den Hauptbremszylinder, die Druckbereitstellungseinrichtung und die Radbremsen hydraulisch angeschlossen. Mittels der Druckregelventilanordnung können die Radbremsen entweder durch den Hauptbremszylinder oder die Druckbereitstellungseinrichtung mit Systembremsdruck versorgt werden. Die Druckbereitstellungseinrichtung betätigt die Radbremsen bevorzugt direkt über die Druckregelventilanordnung, das heißt, z. B. ist der Druckraum der Druckbereitstellungseinrichtung über mindestens ein Ventil mit jeder der Radbremsen verbindbar.
Weiterhin umfasst die Bremsanlage erfindungsgemäß eine elektrisch steuerbare Zusatzdruckbereitstellungsvorrichtung (einen elektrohydraulischen Zusatzverstärker).

Dieser Zusatzverstärker ist bevorzugt als eigenständiges und auch optionales Modul der Bremsanlage konzipiert, welches in schweren Fahrzeugen eingesetzt wird, die ohne eine Bremskraftverstärkung keine ausreichende Bremswirkung erreichen. In leichteren Fahrzeugen sowie in Fahrzeugen mit besonders effizienten Radbremsen kann dieses optionale Modul weggelassen werden, wobei keine wesentlichen Konstruktionsänderungen an der verbleibenden Bremsanlage (Grundaufbau) erforderlich sind. Dies ermöglicht eine werkseitige Vereinfachung der Herstellung einer im Grundaufbau gleichen Bremsanlage für verschiedene Fahrzeugtypen. Hierdurch werden Entwicklungs- und Herstellungskosten gespart.

Beispielsgemäß umfasst der Zusatzverstärker bzw. die Zusatzdruckbereitstellungsvorrichtung einen Elektromotor, eine Pumpe, einen Drucksensor, einen Pedalweg- oder Pedalwinkelsensor, einen elektrischen Energiespeicher und eine zweite elektronische Steuer- und Regeleinheit bzw. Elektronikeinheit. Der Zusatzverstärker liefert bevorzugt einen elektronisch geregelten Zusatzverstärkungs-Druck, der über eine hydraulische Verbindung zu einer Verstärkungs-Wirkfläche im Hauptzylinder geleitet wird und dort den Hauptzylinder betätigt.

Die zweite Steuer- und Regeleinheit bzw. Elektronikeinheit des Zusatzverstärkers (ECU2) ist vorteilhafterweise über eine Kommunikationsverbindung mit der ersten Steuer- und Regeleinheit bzw. Elektronikeinheit für die Normalfunktion verbunden. Bei Bedarf - beispielsweise wenn die erste Elektronikeinheit für die Normalfunktion inaktiv ist und daher auf Kommunikationsanfragen nicht antwortet - wird die Zusatzverstärkungsfunktion aktiviert. Dabei wird die Pedalstellung ermittelt und gemäß einer vorbestimmten Kennlinie in einen Zusatzverstärkungs-Solldruck umgerechnet. Diesen Solldruck stellt dann die zweite Elektronikeinheit des Zusatzverstärkers mit Hilfe von Elektromotor, Pumpe und Drucksensor ein.

Vorteilhafterweise betätigt die Zusatzdruckbereitstellungsvorrichtung den Hauptbremszylinder zur Einstellung eines Solldrucks, insbesondere eines Solldruckes in dem Zwischenraum des Hauptbremszylinders, wenn die erste Steuer- und Regeleinheit und/oder die Druckbereitstellungseinrichtung teilweise oder vollständig inaktiv oder nicht funktionsfähig ist. Das heißt, der Zusatzverstärker wird nur dann in Anspruch genommen, wenn der reguläre Druckaufbau mittels der Druckbereitstellungseinrichtung aufgrund von Funktionsstörungen und/oder Ansteuerungsstörungen nicht möglich ist. Auf diese Weise kann sichergestellt werden, dass auch bei einem derartigen Komponentenausfall genug Bremsdruck in den Radbremsen aufgebaut werden kann. Über eine oben beschriebene Kommunikationsverbindung zwischen der ersten und der zweiten Steuer- und Regeleinheit kann über entsprechend gewählte Signale ein derartiger Zustand erkannt werden.

Vorteilhafterweise ist die erste elektronische Steuer- und Regeleinheit mit einem ersten Sensor verbunden, der den Bremspedalweg oder Bremspedalwinkel oder eine diesem entsprechende Größe bestimmt, und die Zusatzdruckbereitstellungsvorrichtung mit einem zweiten, insbesondere unabhängig ausgeführten, Sensor, insbesondere einem Bremspedalweg- oder Bremspedalwinkelsensor verbunden oder sie umfasst diesen Sensor, welcher den Bremspedalweg oder den Bremspedalwinkel oder eine diesem entsprechende Größe bestimmt.

Der Zusatzverstärker umfasst also gewissermaßen bevorzugt einen Pedalweg- oder Pedalwinkelsensor zur Erfassung der Pedalbetätigung. Ein Kraftsensor, der die Bremspedalbetätigungskraft erfasst, wäre als Signalgeber für den Zusatzverstärker zu aufwändig, insbesondere im Hinblick auf eine modulmäßige Ausgestaltung der Zusatzdruckbereitstellungsvorrichtung. Durch die Verwendung eines einfach gestalteten Zusatzverstärkers, der ohne einen Kraftsensor auskommt, wird zudem die Verfügbarkeit der Bremskraftunterstützung auf Betriebszustände ausgedehnt, in denen die Normalfunktion der Bremsanlage nicht zur Verfügung steht.

Vorteilhafterweise wird anhand von Signalen des zweiten Sensors in der zweiten elektronischen Steuer- und Regeleinheit der Zusatzdruckbereitstellungsvorrichtung ein Solldruck zur Betätigung des Hauptbremszylinders bestimmt. Signale des ersten Sensors sind in diesem Falle nicht notwendig. Diese Auslegung unterstützt eine modulartige Gestaltung des Zusatzdruckbereitstellungsvorrichtung.

In einer Normalbetriebsart "Brake-by-wire" wird ein Bremssystemdruck vorzugsweise von der Druckbereitstellungseinrichtung bereitgestellt. Die Druckbereitstellungseinrichtung wird vorteilhafterweise durch eine Zylinder-Kolben-Anordnung gebildet, deren Kolben durch einen elektromechanischen Aktuator betätigbar ist.

In einer bevorzugten Ausführungsform der Bremsanlage ist an den Hauptbremszylinder eine hydraulisch betätigbare Simulationseinrichtung mit mindestens einem elastischen Element angeschlossen, die, insbesondere in der Betriebsart "Brake-by-wire", dem Fahrzeugführer ein angenehmes Pedalgefühl vermittelt. In dieser Betriebsart verschiebt der Fahrzeugführer bei Betätigung des Bremspedals Druckmittel in die Simulationseinrichtung bzw. den Simulator, wobei Pedalweg und/oder Pedalwinkel bestimmt werden und der Bestimmung eines Sollbremsmomentes zugrunde gelegt werden. Auf diese Weise kann eine reproduzierbare Relation zwischen Pedalweg und einem Sollwert des Bremssystemdrucks realisiert werden.

Die Vorteile der Erfindung bestehen insbesondere darin, dass durch eine Zusatzdruckbereitstellungsvorrichtung eine von der im Normalbetrieb aktiven Druckbereitstellungseinrichtung unabhängige Maßnahme zum Bereitstellen des Bremssystemdrucks realisiert wird. Insbesondere in einer Rückfallebene kann auf diese Weise der Fahrer beim Bremsen des Fahrzeuges unterstützt werden. Durch eine modulartige Bauweise kann die Zusatzdruckbereitstellungsvorrichtung in schweren Fahrzeugen eingesetzt werden, bei denen ein zusätzlicher Bremsdruckaufbau notwendig ist, um die gesetzlichen Vorgaben zu erfüllen. In leichteren Fahrzeugen kann dann ggf. darauf verzichtet werden. Die übrigen Komponenten der Bremsanlage können dann für beide Arten von Fahrzeugen ohne Anpassungen verwendet werden. Bei Verwendung eines Pedalweg- oder Pedalwinkelsensors anstelle eines aufwändigen Kraftsensors kann die modulhafte Bauweise in konsequenter Weise umgesetzt werden.

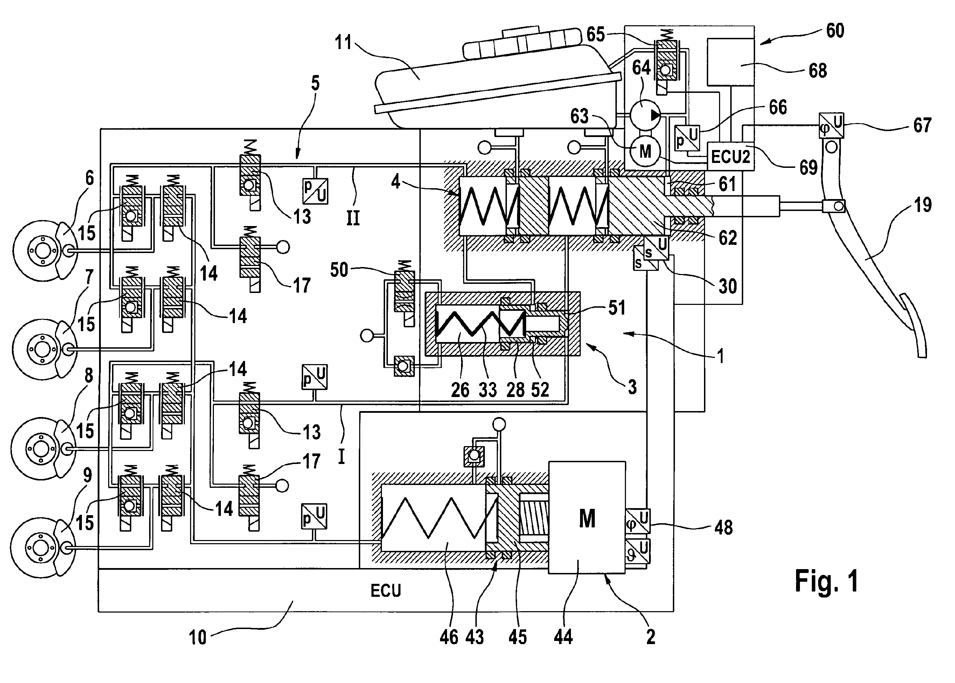

Ein bevorzugtes Ausführungsbeispiel der Erfindung wird in einer Zeichnung näher erläutert. Es zeigt schematisch die Figur ein vorteilhaftes Ausführungsbeispiel einer erfindungsgemäßen Bremsanlage mit einer Radbremsdruckmodulationseinheit, einer Druckbereitstellungseinrichtung und einer Zusatzdruckbereitstellungsvorrichtung.

Im Folgenden wird das Ausführungsbeispiel einer erfindungsgemäßen Bremsanlage gemäß der Figur detailliert beschrieben. Die in der Figur dargestellte beispielsgemäße elektrohydraulische Bremsanlage besteht im Wesentlichen aus einer Betätigungseinrichtung 1 mit einem Tandemhauptbremszylinder 4 und einer Simulationseinrichtung 3, einer elektrisch steuerbaren Druckbereitstellungseinrichtung 2, einer Radbremsdruckmodulationseinrichtung bzw. Druckregelventilanordnung 5 und einer elektronischen Steuer- und Regeleinheit (ECU) 10. An die Radbremsdruckmodulationseinrichtung 5 sind Radbremsen 6, 7, 8, 9 angeschlossen. Die Druckräume des Hauptbremszylinders 4 sind mit einem unter Atmosphärendruck stehenden Druckmittelvorratsbehälter 11 verbindbar. Die Zuordnung der Radbremsen 6, 7, 8, 9 zu den Bremskreisen I, II ist dabei beispielsweise derart getroffen, dass die an den ersten Bremskreis I angeschlossenen Radbremsen 8, 9 einer Fahrzeugachse zugeordnet sind, während die an den zweiten Bremskreis II angeschlossenen Radbremsen 6, 7 der Abbremsung der anderen Fahrzeugachse dienen.

Der indirekten Erfassung der in den Radbremsen 6 bis 9 bei einem Bremsvorgang eingesteuerten Druckes können beispielsweise nicht dargestellte Raddrehzahlsensoren dienen. Der Hauptbremszylinder 4 ist über ein Bremspedal 19 betätigbar. Der Betätigungsweg des Bremspedals 19 wird mittels eines vorzugsweise redundant ausgeführten Wegsensors 30 erfasst, der z. B. den Weg eines Kolbens sensiert und somit der Fahrerwunscherkennung bzw. einer Sollwertgenerierung in der elektronischen Steuer- und Regeleinheit 10 dient.

Die elektrohydraulische Druckbereitstellungseinrichtung 2 besteht beispielsgemäß im Wesentlichen aus einer hydraulischen Zylinder-Kolben-Anordnung 43 sowie einem elektromechanischen Aktuator 44, der beispielsweise durch einen Elektromotor mit einem Untersetzungsgetriebe gebildet wird, der eine Rotationsbewegung des Elektromotors in eine translatorische Bewegung eines hydraulischen Kolbens 45 umsetzt, so dass in einem Druckraum 46 der hydraulischen Zylinder-Kolben-Anordnung 43 ein hydraulischer Druck aufgebaut wird. Der elektromechanische Aktuator 44 wird aus dem elektrischen Bordnetz (nicht dargestellt) des Fahrzeugs, gegebenenfalls gepuffert von einem elektrischen Energiespeicher (nicht dargestellt) mit Energie versorgt. Die Bewegung des Kolbens 45 wird indirekt mittels zumindest eines Drehwinkelsensors 48 erfasst, der die Rotorlage des elektromechanischen Aktuators 44 sensiert.

Die Radbremsdruckmodulationseinrichtung bzw. Druckregelventilanordnung 5 ist beispielsgemäß an den Hauptbremszylinder 4, die Druckbereitstellungseinrichtung 2 und die Radbremsen 6, 7, 8, 9 hydraulisch angeschlossen. Sie dient zur Regelung und/oder Steuerung eines an einer Radbremse 6, 7, 8, 9 eingesteuerten Radbremsdruckes. So können die Radbremsen entweder durch den Hauptbremszylinder 4 oder die Druckbereitstellungseinrichtung 2 mit Druck beaufschlagt werden.

Der Druckraum 46 der Zylinder-Kolben-Anordnung 43 ist beispielsgemäß über den Radbremsen zugeordnete, stromlos geschlossene Sitzventile 14 mit den Radbremsen verbindbar.

Im Normalbetrieb der Bremsanlage ("Brake-by-wire"-Betriebsart) baut der elektromechanisch-hydraulische Aktuator 43, 44 den Bremssystemdruck auf, aus dem der Radbremsdruckmodulator bzw. Druckregelventilanordnung 5 radindividuelle Bremsdrücke erzeugt.

Beispielsgemäß erfolgt ein Radbremsdruckaufbau im Normalbetrieb über ein stromlos geschlossenes analoges Sitzventil 14 und ein Radbremsdruckabbau erfolgt über ein stromlos offenes analoges Sitzventil 15 (dessen Ausgang beispielsgemäß über ein stromlos geschlossenes Ventil 17 je Bremskreis mit dem Druckmittelvorratsbehälter 11 verbindbar ist). Die Sitzventile 14, 15 sind in diesem Beispiel derart orientiert, dass der Ventilstößel des als Druckaufbauventil wirkenden Sitzventils 14 vom Aktuatordruck in der Richtung eines Abhebens vom Ventilsitz und vom Radbremsdruck in der Richtung eines Anpressens auf den Ventilsitz belastet wird, und dass das als Druckabbauventil wirkende Sitzventil 15 vom Radbremsdruck in der Richtung eines Abhebens vom Ventilsitz belastet wird.

Die Druckräume des Hauptbremszylinders 4 sind über jeweils ein stromlos offenes Trennventil 13, welches beispielsgemäß in bestromtem Zustand die Wirkung eines Rückschlagventils erfüllt, mit den stromlos offenen Druckabbauventilen bzw. Sitzventilen 15 der Radbremsen 6 bis 9 verbunden bzw. verbindbar.

In einer Rückfallebenen-Betriebsart sind die beiden Kammern des Tandemhauptzylinders 4 (über die nunmehr offenen Trennventile 13) sowie weitere stromlos offene Ventile 15 des Modulators direkt hydraulisch verbunden(in anderen möglichen Varianten der Bremsanlage sind die weiteren stromlos offenen Ventile des Modulators Bremsdruckaufbauventile und beispielsweise auch digital ausgeführt). Zur Inanspruchnahme der Rückfallebenen-Betriebsart werden in der beispielsgemäßen Bremsanlage jegliche Bestromungen der Ventile und des Aktuators ausgeschaltet.

Ein Umschalten des Modulators bzw. Druckregelventilanordnung 5 aus der Rückfallebenen-Betriebsart in den Normalbetrieb erfolgt im dargestellten Beispiel durch ein Bestromen von vier schaltbaren Ventilen 13, 17. Damit wird die Verbindung der als Bremsdruckabbauventile fungierenden Sitzventile 15 mit dem Hauptbremszylinder 4 unterbrochen und diese Ventile 15 werden ausgangsseitig mit dem Druckmittelvorratsbehälter 11 verbunden.

In einem Normalbetriebsmodus der Bremsanlage ("Brake-bywire"-Betriebsart) wird der Hauptbremszylinder 4 mittels der Ventile 13 von den Radbremsen entkoppelt und Druckmittel wird durch den Fahrzeugführer aus den beiden Druckräumen des Hauptbremszylinder 4 in die Simulationseinrichtung 3 verschoben, welche dem Fahrzeugführer ein angenehmes Pedalgefühl vermittelt. Der Bremsdruck an den Radbremsen wird durch die Druckbereitstellungseinrichtung 2 bereitgestellt.

In einem Notfallbetriebsmodus, welcher auch als Rückfallebene bezeichnet wird (alle Ventile des Modulators, nicht jedoch das Ventil im erfindungsgemäßen Zusatzverstärker sind in einem stromlosen Zustand), sind die Radbremsen über die Ventile 15, 13 mit dem Hautbremszylinder 4 verbunden und der Bremsdruck wird z. B. durch den Fahrzeugführer bereitgestellt.

Die Simulationseinrichtung 3 stellt einen hydraulisch betätigten Pedalgefühlsimulator dar. Die Simulationseinrichtung 3 umfasst beispielsgemäß ein elastisches Element 33 (z.B. eine Simulatorfeder) und einen Kolben 28, der eine Begrenzung eines hydraulischen Raums 26 darstellt. Der hydraulische Raum 26 ist über ein stromlos offenes Ventil 50 mit dem Druckmittelvorratsbehälter 11 verbunden. Der Kolben 28 besitzt auf der der Simulatorfeder 33 abgewandten Seite zwei hydraulische Wirkflächen 51, 52, welche jeweils mit dem Druck eines hydraulischen Kreises I, II des (Tandem-)Hauptbremszylinders 4 beaufschlagbar sind.

Die Simulationseinrichtung 3 umfasst demnach beispielsgemäß zwei hydraulische Wirkflächen 51, 52 deren Bewegung, insbesondere starr, miteinander gekoppelt ist, wobei jede der Wirkflächen 51, 52 mit dem Druck eines der Bremskreise I, II des Hauptbremszylinders 4 beaufschlagt ist.

Die Simulationseinrichtung 3 ist beispielsgemäß zu- und abschaltbar ausgeführt, insbesondere ist ein hydraulischer Raum 26 der Simulationseinrichtung 3 mittels eines elektrisch steuerbaren Simulatorfreigabeventils 50 mit dem unter Atmosphärendruck stehenden Druckmittelvorratsbehälter 11 verbindbar/trennbar.

In einem Normalbetrieb der Bremsanlage sind hydraulische Verbindungen vom (Tandem-)Hauptbremszylinder 4 zu den Radbremsen gesperrt, während der Simulator freigegeben ist. In einer Rückfallebenen-Betriebsart ist der (Tandem-)Hauptbremszylinder 4 mit den Radbremsen verbunden und der Simulator ist abgesperrt.

Weiterhin umfasst die Bremsanlage eine elektrisch steuerbare Zusatzdruckbereitstellungsvorrichtung 60 (elektrohydraulischer Zusatzverstärker), mittels welchem der Hauptbremszylinder 4 betätigbar ist. Beispielsgemäß ist ein Zwischenraum 61 des Hauptbremszylinders 4 durch die Zusatzdruckbereitstellungsvorrichtung 60 mit Druck beaufschlagbar, was zu einer Betätigung eines Kolbens 62 des Hauptbremszylinders 4 führt. Die Zusatzdruckbereitstellungsvorrichtung 60 (Zusatzverstärker) wirkt somit als ein dem Hauptbremszylinder 4 vorgeschalteter Bremskraftverstärker, der einer über das Bremspedal 19 eingeleiteten Betätigungskraft eine Verstärkungskraft additiv überlagert.

Beispielsgemäß umfasst die Zusatzdruckbereitstellungsvorrichtung 60 einen Elektromotor 63, eine Pumpe 64, ein Staudruckregelventil 65, einen Drucksensor 66, einen Pedalwegoder Pedalwinkelsensor 67, einen elektrischen Energiespeicher 68 und eine Elektronikeinheit 69 (ECU2). Die Zusatzdruckbereitstellungsvorrichtung 60 liefert einen elektronisch geregelten Zusatzverstärkungs-Druck, der über eine hydraulische Verbindung in den Zwischenraum 61 im Hauptbremszylinder 4 geleitet wird und so den Hauptbremszylinder 4 betätigt. Die Zusatzdruckbereitstellungsvorrichtung 60 ist somit weitgehend autark ausgeführt, insbesondere was die Energieversorgung und die Sensoren betrifft.

Die Elektronikeinheit 69 ist beispielsgemäß über eine Kommunikationsverbindung mit der Steuer- und Regeleinheit 10 verbunden. Bei Bedarf, z. B. bei einem Fehler der Steuer- und Regeleinheit 10, wird die Zusatzverstärkungsfunktion aktiviert. Dabei wird die Pedalstellung mittels Sensor 67 ermittelt und gemäß einer vorbestimmten Kennlinie in einen Zusatzverstärkungs-Solldruck umgerechnet. Diesen Solldruck stellt die Elektronikeinheit 69 mit Hilfe von Elektromotor 63, Pumpe 64 und Drucksensor 66 ein.

Die erfindungsgemäße Bremsanlage ist sowohl für achsweise als auch für diagonale Bremskreisaufteilung verwendbar.

Es sind auch andere Ausführungsbeispiele der Radbremsdruckmodulationseinrichtung bzw. Druckregelventilanordnung 5 oder der Simulationseinrichtung 3 denkbar, als das in der Figur dargestellte Ausführungsbeispiel.

### Bezugszeichenliste

- 1: Betätigungseinrichtung
- 2: Druckbereitstellungseinrichtung
- 3: Simulationseinrichtung
- 4: Hauptbremszylinder
- 5: Druckregelventilanordnung
- 6, 7, 8, 9: Radbremse
- 10: Steuer- und Regeleinheit
- 11: Druckmittelvorratsbehälter
- 13: Trennventil
- 14, 15: Sitzventil
- 17: Ventil
- 19: Bremspedal
- 26: hydraulischer Raum
- 28: Kolben
- 30: Wegsensor
- 33: elastisches Element
- 43: Zylinder-Kolben-Anordnung
- 44: Aktuator
- 45: Kolben
- 46: Druckraum
- 48: Drehwinkelsensor
- 50: Simulatorfreigabeventil
- 51, 52: Wirkfläche
- 60: Zusatzdruckbereitstellungsvorrichtung
- 61: Zwischenraum
- 62: Kolben
- 63: Elektromotor
- 64: Pumpe
- 65: Staudruckregelventil
- 66: Drucksensor
- 67: Pedalwinkelsensor
- 68: Energiespeicher
- 69: Elektronikeinheit (ECU2)

- I, II: Bremskreis

## Patentansprüche

1. Bremsanlage für Kraftfahrzeuge mit einem mittels eines Bremspedals (19) betätigbaren Hauptbremszylinder (4), an den Radbremsen (6, 7, 8, 9) angeschlossen sind, einer elektrisch steuerbaren Druckbereitstellungseinrichtung (2), einer Druckregelventilanordnung (5) zur Regelung und/oder Steuerung eines an einer Radbremse (6, 7, 8, 9) eingesteuerten Radbremsdruckes und einer ersten elektronischen Steuer- und Regeleinheit (10), welche die Druckbereitstellungseinrichtung (2) und/oder die Druckregelventilanordnung (5) steuert oder regelt, **dadurch gekennzeichnet, dass** die Bremsanlage eine elektrisch steuerbare Zusatzdruckbereitstellungsvorrichtung (60) umfasst, mittels welcher der Hauptbremszylinder (4) betätigbar ist, insbesondere mittels welcher ein Druck in einem Zwischenraum (61) des Hauptbremszylinders (4) steuer- oder regelbar ist.

2. Bremsanlage nach Anspruch 1, **dadurch gekennzeichnet, dass** die Zusatzdruckbereitstellungsvorrichtung (60) als ein eigenständiges Modul der Bremsanlage ausgeführt ist.

3. Bremsanlage nach Anspruch 1 oder 2, **dadurch gekennzeichnet, dass** die Zusatzdruckbereitstellungsvorrichtung (60) ein oder mehrere, insbesondere alle, der nachfolgenden Komponenten umfasst: einen Elektromotor (63), eine Pumpe (64), einen Drucksensor (66), einen Bremspedalweg- oder Bremspedalwinkelsensor (67), einen elektrischen Energiespeicher (68) und/oder eine zweite elektronische Steuer- und Regeleinheit (69).

4. Bremsanlage nach Anspruch 3, **dadurch gekennzeichnet, dass** die zweite elektronische Steuer- und Regeleinheit (69) über eine Kommunikationsverbindung mit der ersten elektronischen Steuer- und Regeleinheit (10) verbunden ist.

5. Bremsanlage nach einem der Ansprüche 1 bis 4, **dadurch gekennzeichnet, dass** die Zusatzdruckbereitstellungsvorrichtung (60) den Hauptbremszylinder (4) zur Einstellung eines Solldruckes betätigt, insbesondere einen Solldruck in dem Zwischenraum (61) einstellt, wenn die erste elektronischen Steuer- und Regeleinheit (10) und/oder die Druckbereitstellungseinrichtung (2) teilweise oder vollständig inaktiv oder nicht funktionsfähig ist.

6. Bremsanlage nach einem der Ansprüche 1 bis 5, **dadurch gekennzeichnet, dass** die erste elektronische Steuer- und Regeleinheit (10) mit einem ersten Sensor (30) verbunden ist, der einen Bremspedalweg oder einen Bremspedalwinkel oder eine diesem entsprechende Größe bestimmt, und die Zusatzdruckbereitstellungsvorrichtung (60) mit einem zweiten, insbesondere unabhängig ausgeführten, Sensor (67), insbesondere einem Bremspedalweg- oder Bremspedalwinkelsensor, verbunden ist oder diesen umfasst, der den Bremspedalweg oder Bremspedalwinkel oder eine diesem entsprechende Größe bestimmt.

7. Bremsanlage nach Anspruch 6, **dadurch gekennzeichnet, dass** anhand von Signalen des zweiten Sensors (67) in der zweiten elektronischen Steuer- und Regeleinheit (69) ein Solldruck zur Betätigung des Hauptbremszylinders (4) bestimmt wird.

8. Bremsanlage nach einem der Ansprüche 1 bis 7, **dadurch gekennzeichnet, dass** in einer Normalbetriebsart "Brake-by-wire" ein Bremssystemdruck von der Druckbereitstellungseinrichtung (2) bereitgestellt wird.

9. Bremsanlage nach einem der Ansprüche 1 bis 8, **dadurch gekennzeichnet, dass** die Druckbereitstellungseinrichtung (2) durch eine Zylinder-Kolben-Anordnung (43) gebildet wird, deren Kolben (45) durch einen elektromechanischen Aktuator (44) betätigbar ist.

10. Bremsanlage nach einem der Ansprüche 1 bis 9, **dadurch gekennzeichnet, dass** an den Hauptbremszylinder (4) eine hydraulisch betätigbare Simulationseinrichtung (3) mit mindestens einem elastischen Element (33) angeschlossen ist, die, insbesondere in einer Betriebsart "Brake-by-wire", dem Fahrzeugführer ein angenehmes Pedalgefühl vermittelt.

## Claims

1. Brake system for motor vehicles with a brake master cylinder (4) which can be activated by means of a brake pedal (19) and to which wheel brakes (6, 7, 8, 9) are connected, an electrically controllable pressure-generating device (2), a pressure-regulating valve arrangement (5) to regulate and/or control a wheel brake pressure set at a wheel brake (6, 7, 8, 9), and a first electronic control and regulating unit (10) which controls or regulates the pressure-generating device (2) and/or the pressure-regulating valve arrangement (5), **characterized in that** the brake system comprises an electrically controllable auxiliary pressure-generating device (60) by means of which the brake master cylinder (4) can be activated, in particular by means of which a pressure in an intermediate chamber (61) of the brake master cylinder (4) can be controlled or regulated.

2. Brake system according to Claim 1, **characterized in that** the auxiliary pressure-generating device (60) is designed as an independent module of the brake system.

3. Brake system according to Claim 1 or 2, **characterized in that** the auxiliary pressure-generating device (60) comprises one or more, in particular all, of the following components: an electric motor (63), a pump (64), a pressure sensor (66), a brake pedal travel or brake pedal angle sensor (67), an electrical energy accumulator (68) and/or a second electronic control and regulating unit (69).

4. Brake system according to Claim 3, **characterized in that** the second electronic control and regulating unit (69) is connected via a communication connection with the first electronic control and regulating unit (10).

5. Brake system according to any of Claims 1 to 4, **characterized in that** the auxiliary pressure-generating device (60) activates the brake master cylinder (4) to set a nominal pressure, in particular a nominal pressure in the intermediate chamber (61), when the first electronic control and regulating unit (10) and/or the pressure-generating device (2) is partly or fully inactive or non-functioning.

6. Brake system according to any of Claims 1 to 5, **characterized in that** the first electronic control and regulating unit (10) is connected with a first sensor (30) which determines a brake pedal travel or a brake pedal angle or a value corresponding thereto, and the auxiliary brake pressure-generating device (60) is connected with or comprises a second, in particular independently constructed sensor (67), in particular a brake pedal travel or brake pedal angle sensor, which determines the brake pedal travel or brake pedal angle or a value corresponding thereto.

7. Brake system according to Claim 6, **characterized in that**, using signals from the second sensor (67) in the second electronic control and regulating unit (69), a nominal pressure is determined to activate the brake master cylinder (4).

8. Brake system according to any of Claims 1 to 7, **characterized in that** in a normal "brake by wire" operating mode, a brake system pressure is generated by the pressure-generating device (2).

9. Brake system according to any of Claims 1 to 8, **characterized in that** the pressure-generating device (2) is formed by a cylinder-piston arrangement (43), the piston (45) of which can be activated by an electromechanical actuator (44).

10. Brake system according to any of Claims 1 to 9, **characterized in that** connected to the brake master cylinder (4) is a hydraulically activatable simulation device (3) with at least one elastic element (33) which, in particular in a "brake by wire" operating mode, gives the vehicle driver an acceptable pedal feel.

## Revendications

1. Installation de freinage pour véhicules automobiles, comprenant un cylindre de freinage principal (4) pouvant être actionné au moyen d'une pédale de frein (19), auquel sont raccordés des freins de roue (6, 7, 8, 9), un dispositif d'alimentation en pression à commande électrique (2), un agencement de soupape de régulation de la pression (5) pour réguler et/ou commander une pression de frein de roue appliquée à un frein de roue (6, 7, 8, 9) et une première unité de commande et de régulation électronique (10), qui commande ou régule le dispositif d'alimentation en pression (2) et/ou l'agencement de soupape de régulation de la pression (5), **caractérisée en ce que** l'installation de freinage comprend un dispositif d'alimentation en pression supplémentaire à commande électrique (60) au moyen duquel le cylindre de freinage principal (4) peut être actionné, en particulier au moyen duquel une pression dans un espace intermédiaire (61) du cylindre de freinage principal (4) peut être commandée ou régulée.

2. Installation de freinage selon la revendication 1, **caractérisée en ce que** le dispositif d'alimentation en pression supplémentaire (60) est réalisé sous forme de module autonome de l'installation de freinage.

3. Installation de freinage selon la revendication 1 ou 2, **caractérisée en ce que** le dispositif d'alimentation en pression supplémentaire (60) comprend un ou plusieurs, en particulier la totalité, des composants suivants : un moteur électrique (63), une pompe (64), un capteur de pression (66), un capteur de course de pédale de frein ou d'angle de pédale de frein (67), un accumulateur d'énergie électrique (68) et/ou une deuxième unité de commande et de régulation électronique (69).

4. Installation de freinage selon la revendication 3, **caractérisée en ce que** la deuxième unité de commande et de régulation électronique (69) est connectée par le biais d'une liaison de communication à la première unité de commande et de régulation électronique (10).

5. Installation de freinage selon l'une quelconque des revendications 1 à 4, **caractérisée en ce que** le dispositif d'alimentation en pression supplémentaire (60) actionne le cylindre de freinage principal (4) pour ajuster une pression de consigne, en particulier ajuste une pression de consigne dans l'espace intermédiaire (61), lorsque la première unité de commande et de régulation électronique (10) et/ou le dispositif d'alimentation en pression (2) sont en partie ou complètement inactivés ou non fonctionnels.

6. Installation de freinage selon l'une quelconque des revendications 1 à 5, **caractérisée en ce que** la première unité de commande et de régulation électronique (10) est connectée à un premier capteur (30) qui détermine une course de pédale de frein ou un angle de pédale de frein ou une grandeur correspondant à ceux-ci, et le dispositif d'alimentation en pression supplémentaire (60) est connecté à un deuxième capteur (67) réalisé notamment indépendamment, en particulier un capteur de course de pédale de frein ou d'angle de pédale de frein, ou comprend celui-ci, le capteur déterminant la course de pédale de frein ou l'angle de pédale de frein ou une grandeur correspondant à ceux-ci.

7. Installation de freinage selon la revendication 6, **caractérisée en ce qu'**à l'aide de signaux du deuxième capteur (67) dans la deuxième unité de commande et de régulation électronique (69), on détermine une pression de consigne pour l'actionnement du cylindre de freinage principal (4).

8. Installation de freinage selon l'une quelconque des revendications 1 à 7, **caractérisée en ce qu'**en mode de fonctionnement normal "Brake-by-Wire", une pression du système de freinage est fournie par le dispositif d'alimentation en pression (2).

9. Installation de freinage selon l'une quelconque des revendications 1 à 8, **caractérisée en ce que** le dispositif d'alimentation en pression (2) est formé par un agencement cylindre-piston (43) dont le piston (45) peut être actionné par un actionneur électromécanique (44).

10. Installation de freinage selon l'une quelconque des revendications 1 à 9, **caractérisée en ce qu'**un dispositif de simulation à commande hydraulique (3) est raccordé au cylindre de freinage principal (4) avec au moins un élément élastique (33), lequel donne au conducteur du véhicule, notamment dans un mode de fonctionnement "Brake-by-Wire", une sensation agréable sur la pédale.
